(19) Europäisches Patentamt
European Patent Office
Office européen des brevets

(11) EP 2 044 157 B1

# (12) EUROPÄISCHE PATENTSCHRIFT

(45) Veröffentlichungstag und Bekanntmachung des Hinweises auf die Patenterteilung:
**15.09.2010 Patentblatt 2010/37**

(21) Anmeldenummer: **07787352.9**

(22) Anmeldetag: **11.07.2007**

(51) Int Cl.:
***C09B 57/04*** *(2006.01)* ***C09B 67/10*** *(2006.01)*
***C09B 67/54*** *(2006.01)*

(86) Internationale Anmeldenummer:
**PCT/EP2007/057078**

(87) Internationale Veröffentlichungsnummer:
**WO 2008/009597 (24.01.2008 Gazette 2008/04)**

## (54) ISOINDOLINPIGMENTE

ISOINDOLINE PIGMENTS

PIGMENTS D'ISOINDOLINE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **18.07.2006 EP 06117360**

(43) Veröffentlichungstag der Anmeldung:
**08.04.2009 Patentblatt 2009/15**

(73) Patentinhaber: **BASF SE**
**67056 Ludwigshafen (DE)**

(72) Erfinder:
- **LÖBEL, Johannes**
  **68163 Mannheim (DE)**
- **STOHR, Andreas**
  **67251 Freinsheim (DE)**
- **BÖTTCHER, Peter**
  **67316 Carlsberg (DE)**

(56) Entgegenhaltungen:
**EP-A- 0 017 214**
**EP-A- 0 029 007**
**EP-A- 0 036 523**
**WO-A-2004/108837**
**DE-A1- 2 800 815**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 044 157 B1

## Beschreibung

Die vorliegende Beschreibung betrifft Isoindolinpigmente der allgemeinen Formel I

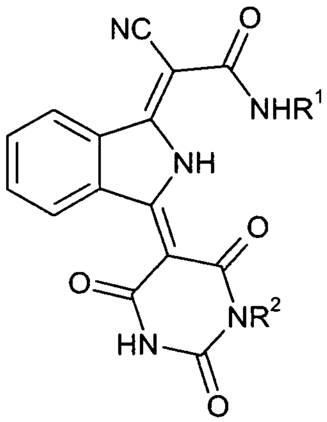

I

in der die Variablen folgende Bedeutung haben:

$R^1$ $C_1$-$C_4$-Alkyl ;
$R^2$ Wasserstoff oder $C_1$-$C_4$-Alkyl ,

die in LDPE eine Dispergierhärte ≤ 10 aufweisen und zur Einstellung der Standardfarbtiefe 1/3 ein Aufhellverhältnis von ≥ 5 erfordern.

Außerdem betrifft die Erfindung die Herstellung der Isoindolinpigmente und ihre Verwendung zur Einfärbung von hochmolekularen organischen Materialien natürlicher und synthetischer Herkunft sowie Kunststoffe, die mit den Isoindolinpigmenten eingefärbt sind.

Um Kunststoffe, Lacke und Druckfarben gelb einzufärben, werden üblicherweise anorganische Pigmente, z.B. C.I. Pigment Yellow 34 oder 184, oder organische Pigmente, z.B. Chinophthalonpigmente, wie C.I. Pigment Yellow 138, Isoindolinpigmente, wie C.I. Pigment Yellow 139, oder Azopigmente, wie C.I. Pigment Yellow 74, 151 oder 180, eingesetzt. Die Nachfrage nach schwermetall- und halogenfreien Farbmitteln, insbesondere Pigmenten, ist in letzter Zeit aus Umweltgesichtspunkten stark angestiegen.

Isoindolinpigmente, insbesondere das schon seit etwa 30 Jahren bekannte C.I. Pigment Yellow 185, sind daher von zunehmendem Interesse. Die seit etwa 25 Jahren auf dem Markt verfügbaren Pulverpigmente auf Basis von C.I. Pigment Yellow 185 können jedoch nur als Druckfarben- und Lackpigmente eingesetzt werden. Aufgrund ihrer Dispergierhärte sind sie nicht für die direkte Anwendung in Kunststoffen geeignet, sondern müssen zunächst in aufwendiger Weise in Präparationen überführt werden.

Auch bei den in der Patentliteratur beschriebenen Herstellungsverfahren wird kein C.I. Pigment Yellow 185 erhalten, das die für den direkten Einsatz in Kunststoffen erforderlichen Eigenschaften aufweist.

So wird in der DE-A-29 14 086 die Herstellung der Isoindolingpigmente der vorliegenden Formel I in wäßrigem Medium beschrieben, bei der in einem ersten Schritt Diiminoisoindolin (II)

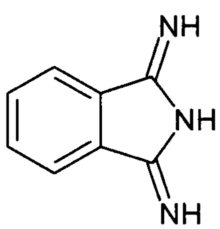

II

durch Kondensation mit einem Cyanacetamid der Formel III

$NC\text{-}CH_2\text{-}CONHR^1$ III

in alkalisch-wäßrigem Medium bei 25 bis 90°C in ein Halbkondensat der Formel IV

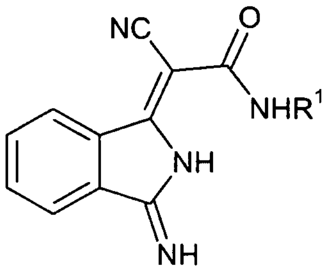

IV

überführt wird, das ohne Zwischenisolierung nach Sauerstellen des Reaktionsgemischs bei Temperaturen von 70 bis 90°C mit einer Barbitursäure der Formel V

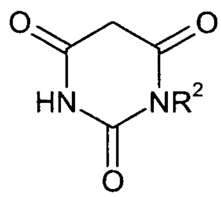

V

zum Isoindolinpigment I umgesetzt wird.

Nach 2 bis 3stündigem Nachrühren des Reaktionsgemischs bei 90 bis 95°C wird das Isoindolinpigment I dann isoliert. Das auf diese Weise erhaltene Isoindolinpigment I ist farbstark, kann jedoch aufgrund seiner Dispergierhärte von etwa 50 nicht direkt in Kunststoffen eingesetzt werden.

In der DE-A-27 57 982 erfolgt die Herstellung von Isoindolinpigmenten mit einer Carbonamido- oder (p-Chlor) Phenylcarbonamidogruppe (Rest $R^1$: Wasserstoff oder (p-Chlor)Phenyl) nach diesem Eintopfverfahren. Die so erhaltenen Isoindolinpigmente werden als in Kunststoffen leicht dispergierbar beschrieben. Um ihre Licht- und Wetterechtheit zu erhöhen, wird eine thermische Nachbehandlung des wäßrigen Reaktionsgemischs bei 110 bis 140°C empfohlen.

Gemäß der in der EP-A-29 007 beschriebenen Vorgehensweise erfolgt die Herstellung der Isoindolinpigmente der vorliegenden Formel I, wie auch aus der DE-A-16 70 748 bekannt, zweistufig durch erste Kondensation zum Halbkondensat IV in Methanol, Zwischenisolierung und weitere Umsetzung in verdünnter Essigsäure. Um gröbere, deckendere Pigmentformen herzustellen, wird auch eine anschließende thermische Behandlung des Reaktionsgemischs vorgeschlagen. Wenn man diese Formierung, wie in den Beispielen beschrieben, durch 3stündiges Erhitzen des Rohpigments in wäßriger Essigsäure auf 120°C vornimmt, wird jedoch ein sehr farbschwaches C.I. Pigment Yellow 185 erhalten.

Der Erfindung lag daher die Aufgabe zugrunde, Isoindolinpigmente bereitzustellen, die sich durch insgesamt vorteilhafte Anwendungseigenschaften auszeichnen und insbesondere auch leicht in Kunststoffen zu dispergieren sind.

Demgemäß wurden die Isoindolinpigmente der allgemeinen Formel I

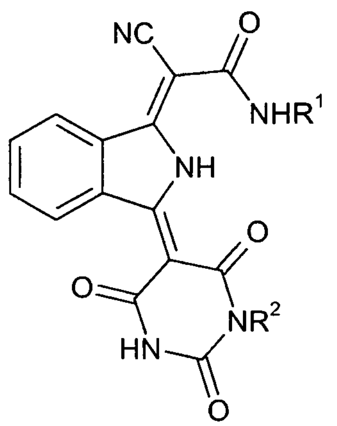

I

gefunden, in der die Variablen folgende Bedeutung haben:

$R^1$ $C_1$-$C_4$-Alkyl;
$R^2$ Wasserstoff oder $C_1$-$C_4$-Alkyl,

die in LDPE eine Dispergierhärte ≤ 10 und zur Einstellung der Standardfarbtiefe 1/3 ein Aufhellverhältnis von ≥ 5 erfordern.

Außerdem wurde ein Verfahren zur Herstellung der Isoindolinpigmente I gefunden, das dadurch gekennzeichnet ist, daß man das bei der Pigmentsynthese anfallende Rohpigment einem Kristallisationsprozeß in Gegenwart eines die Pigmentteilchen nur anlösenden Mittels unterzieht.

Schließlich wurde die Verwendung der Isoindolinpigmente I zur Einfärbung von hochmolekularen organischen Materialien natürlicher und synthetischer Herkunft gefunden.

Die erfindungsgemäßen Isoindolinpigmente I zeichnen sich durch hervorragende Anwendungseigenschaften aus. Von besonderer Bedeutung ist dabei C.I. Pigment Yellow 185 ($R^1$: Methyl, $R^2$: Wasserstoff).

Die erfindungsgemäßen Isoindolinpigmente I sind in den verschiedensten Anwendungsmedien, insbesondere auch in Kunststoffen, sehr gut dispergierbar und haben in LDPE eine Dispergierhärte von ≤ 10 (bestimmt in Anlehnung an DIN EN 13900).

Gleichzeitig weisen sie hervorragende koloristische Eigenschaften, vor allem auch hohe Farbstärke, auf. Die Farbstärke wird erfindungsgemäß durch das zur Einstellung der Standardfarbtiefe ST 1/3 (DIN 53235-1) erforderliche Aufhellverhältnis definiert. So liegt das Aufhellverhältnis in LDPE bei ≥ 5, bevorzugt bei ≥ 5,5 und in PVC bei ≥ 9, bevorzugt bei ≥ 10,5.

Die erfindungsgemäßen Isoindolinpigmente I weisen in der Regel eine mittlere Primärteilchengröße von 50 bis 180 nm auf.

Die BET-Oberfläche der erfindungsgemäßen Isoindolinpigmente I liegt üblicherweise bei 25 bis 40 $m^2$/g.

Die erfindungsgemäßen Isoindolinpigmente I können untergeordnete Mengen an nicht umgesetztem Halbkondensat IV und verseiftem Halbkondensat (Verseifung der Iminfunktion zur Carbonylgruppe) enthalten. Der Anteil dieser Nebenkomponenten liegt in der Summe im allgemeinen unter 20 Gew.-%, insbesondere unter 15 Gew.-%.

Die erfindungsgemäßen Isoindolinpigmente I sind vorteilhaft nach dem ebenfalls erfindungsgemäßen Herstellungsverfahren erhältlich, bei dem das bei der Pigmentsynthese anfallende Rohpigment einem Kristallisationsprozeß in Gegenwart eines die Pigmentteilchen nur anlösenden Mittels unterzogen wird.

Die Synthese des Rohpigments kann dabei nach den bekannten Verfahren unter Zwischenisolierung des Halbkondensats IV (Variante A) oder als Eintopfsynthese (Variante B) erfolgen, wobei die Variante B bevorzugt ist.

Bei Variante A werden organische Lösungsmittel als Reaktionsmedium eingesetzt. Für den ersten Kondensationsschritt eignen sich sowohl protische Lösungsmittel, insbesondere aliphatische Alkohole, wie Methanol, Ethanol, Isopropanol, Isobutanol, Amylalkohol, Ethylenglykol und Ethylenglykolmonoethylether, als auch aprotische Lösungsmittel, wie Dimethylformamid, Dimethylacetamid, N-Methylpyrrolidon, Acetonitril, Dimethylsulfoxid, Dioxan, Sulfolan, Dichlorbenzol und Nitrobenzol, wobei die alkoholischen Lösungsmittel bevorzugt sind. Der zweite Kondensationsschritt erfolgt vorzugsweise in aliphatischen Carbonsäuren, wie Ameisensäure, Essigsäure, Propionsäure und Mono- und Dichloressigsäure. Die Reaktionstemperatur beträgt üblicherweise in der ersten Stufe 40 bis 120°C und in der zweiten Stufe 60 bis 180°C.

Bei Variante B wird in wäßrigem Medium gearbeitet, vorzugsweise in Wasser oder auch in Mischungen von Wasser und Ethylenglykol. Gewünschtenfalls können auch oberflächenaktive Mittel zugesetzt werden. Der erste Kondensationsschritt wird in der Regel bei 10 bis 180°C, insbesondere bei 10 bis 90°C, und einem pH-Wert > 7, insbesondere

von 8 bis 11, durchgeführt. Die weitere Umsetzung des Halbkondensats wird üblicherweise bei 40 bis 150°C, vor allem bei 40 bis 100°C, und einem pH-Wert < 7, insbesondere von 1 bis 3, vorgenommen. Die Einstellung des pH-Wertes erfolgt in der Regel durch Zugabe von Ammoniak, bevorzugt konzentrierten wäßrigen Ammoniaklösungen, bzw. von anorganischen Säuren vorzugsweise in verdünnter Form, wobei Schwefelsäure, Phosphorsäure und Salzsäure bevorzugt sind.

Die Herstellung des Rohpigments nach der Variante B ist insbesondere dann von Vorteil, wenn der erfindungsgemäße Kristallisationsprozeß durch thermische Behandlung des Rohpigments in wäßriger Suspension vorgenommen wird.

Bei dieser bevorzugten Verfahrensvariante kann die Kristallisation ohne Zwischenisolierung des Rohpigments direkt in der bei der Synthese anfallenden Suspension erfolgen.

Wenn außergewöhnlich hohe Anforderungen an die Reinheit der Isoindolinpigmente I gestellt werden, kann das Rohpigment auch isoliert und gegebenenfalls gereinigt sowie auch anschließend getrocknet und zerkleinert werden.

Bei dem erfindungsgemäßen Kristallisationsprozeß in wäßriger Suspension wird das Rohpigment 1 bis 60 h auf eine Temperatur T im Bereich von 90 bis 180°C erhitzt. Die Temperatur T [°C] hängt dabei von der Behandlungsdauer t [h] ab und ist nach folgender Formel zu berechnen:

$$T\,[°C] = [148 - 14{,}4\ \ln(t)] \pm 10$$

Beispielhaft sind im folgenden einige Behandlungsdauern t [h] den entsprechend zu wählenden Temperaturen T[°C] gegenübergestellt:

| Behandlungsdauer t [h] | Behandlungstemperatur T[°C] |
|---:|---:|
| 2 | 138 ± 10 |
| 3 | 132 ± 10 |
| 12 | 112 ± 10 |
| 36 | 96 ± 10 |

Der erfindungsgemäße Kristallisationsprozeß wird in der Regel in neutralem oder, insbesondere wenn die bei der Synthese anfallende, bereits einen pH-Wert unter 7 aufweisende Reaktionssuspension eingesetzt wird, in saurem Medium durchgeführt.

Essigsäure eignet sich dabei nicht zur Einstellung des pH-Wertes. Generell sind organische Säuren weniger geeignet als anorganische Säuren, wobei Schwefelsäure, Phosphorsäure und Salzsäure als anorganische Säure bevorzugt sind.

In der Regel liegt das Gewichtsverhältnis von wäßrigem Medium zu Rohpigment bei 5 :1 bis 50 : 1, insbesondere bei 10 : 1 bis 40 : 1.

Der wäßrigen Suspension können auch organische Lösungsmittel zugesetzt werden.

Hierdurch kann es zu Abweichungen von den nach der obigen Formel berechneten Temperaturen bzw. Behandlungsdauern kommen. In seltenen Fällen kann sich die erforderliche Behandlungsdauer verlängern, in der Regel wird sie sich jedoch auf bis ein Drittel der berechneten Dauer verkürzen.

Geeignete Lösungsmittel sind z.B. Alkohole, Etheralkohole, Ether, Ketone, Carbonsäureamide und Carbonsäureester sowie deren Mischungen. Im einzelnen seien beispielhaft genannt:

aliphatische und araliphatische, einwertige oder mehrwertige Alkohole mit bis zu 10 Kohlenstoffatomen, wie Methanol, Ethanol, Propanol, Isopropanol, Butanol, Isobutanol, tert.-Butanol, Amylalkohol, Isoamylalkohol, Hexanol, Isohexanol, Heptanol, Octanol, 2-Ethylhexanol, Ethylenglykol, 1,2- und 1,3-Propylenglykol, Cyclohexanol, Methylcyclohexanol, Benzylalkohol und 2-Phenylethanol;

Mono- und Di-$C_2$-$C_3$-alkylenglykolmono-$C_1$-$C_4$-alkylether, wie Ethylenglykolmonomethyl-, -ethyl- und -butylether und Diethylenglykolmonomethyl- und -ethylether; acyclische und cyclische aliphatische Ether mit bis zu 10 Kohlenstoffatomen, wie Dipropylether, Diisopropylether, Dibutylether, Diisobutylether, Tetrahydrofuran, Dioxan, Diethylenglykoldimethyl- und -diethylether;

acyclische und cyclische aliphatische und araliphatische Ketone mit bis zu 10 Kohlenstoffatomen, wie Aceton,

Methylethylketon, Methylpropylketon, Methylbutylketon, Diethylketon, Methylisopropylketon, Methylisobutylketon, Cyclopentanon, Cyclohexanon, Methylcyclohexanon, Acetophenon und Propiophenon;

Amide und $C_1$-$C_4$-Alkylamide von aliphatischen Carbonsäuren mit bis zu 4 Kohlenstoffatomen, wie Formamid, N, N-Dimethyl- und N,N-Diethylformamid, N,N-Dimethyl- und N,N-Diethylacetamid, N,N-Dimethyl- und N,N-Diethylpropionsäureamid und N-Methylpyrrolidon;

Ester aromatischer Carbonsäuren mit insgesamt bis zu 12 Kohlenstoffatomen, wie Phthalsäuredimethylester und Phthalsäurediethylester.

Bevorzugt werden dabei die Lösungsmittel eingesetzt, die sich bei der Aufarbeitung leicht entfernen lassen, z.B. durch Auswaschen mit Wasser, azeotrope Destillation mit Wasser, Wasserdampfdestillation oder durch Trocknen des gesamten Ansatzes.

Besonders bevorzugte Lösungsmittel sind Glykole und deren Mono- und Dialkylether.

Enthält das wäßrige Kristallisationsmedium ein organisches Lösungsmittel, so liegt das Gewichtsverhältnis von Wasser zu organischem Lösungsmittel üblicherweise bei 99 : 1 bis 50 : 50, insbesondere bei 95 : 5 bis 80 : 20.

Der Kristallisationsprozeß kann unter Dispergieren des Rohpigments im wäßrigen Medium oder auch durch einfaches Verweilenlassen erfolgen. Bevorzugt wird die Mischung aus Rohpigment und wäßrigem Medium gerührt.

Da der Kristallisationsprozeß bei Temperaturen im Siedebereich des wäßrigen Mediums bzw. darüber vorgenommen wird, empfiehlt sich der Einsatz druckstabiler Apparate, z.B. Druckkessel, oder das Arbeiten unter Rückfluß.

Die erfindungsgemäßen Isoindolinpigmente I können wie üblich durch Abfiltrieren, Waschen und Trocknen isoliert werden. Zweckmäßigerweise wird das getrocknete Produkt einer Desagglomerierungsmahlung z.B. in Rotor-, Zahnkranz- oder Strahlmühlen unterzogen. Alternativ kann der wäßrige Filterkuchen auch gefrier- oder sprühgetrocknet werden.

Gewünschtenfalls kann man beim erfindungsgemäßen Kristallisationsverfahren auch ein Rohpigment einsetzen, das zuvor einer Trockenmahlung mit einem schwach basischen Mahlhilfsmittel unterzogen wurde. Hierdurch sind erfindungsgemäße Isoindolinpigmente I mit besonders enger Primärteilchengrößenverteilung zu erhalten, die einen etwas röteren Farbton aufweisen.

Beispiele für geeignete Mahlhilfsmittel sind wasserlösliche Salze von schwachen anorganischen Säuren, insbesondere Alkalimetallcarbonate und -hydrogencarbonate, wie Natriumcarbonat, Kaliumcarbonat, Natriumhydrogencarbonat und Kaliumhydrogencarbonat.

In der Regel beträgt das Gewichtsverhältnis von Mahlhilfsmittel zu Rohpigment 10 : 1 bis 1 : 1, vorzugsweise 4 : 1 bis 1 : 1.

Als Mahlapparate eignen sich beispielsweise Kugelmühlen, Schwingmühlen, Planetenmühlen und Attritoren. Geeignete Mahlkörper sind z.B. Stahlkugeln, Silicium/Aluminium/Zirkonoxidperlen, Glasperlen und Achatkugeln, die üblicherweise einen Durchmesser von 0,1 bis 5 cm aufweisen.

Aus Sicherheitsgründen kann es vorteilhaft sein, die Mahlung unter Inertgasatmosphäre durchzuführen.

Vorzugsweise wird so lange gemahlen, bis das Mahlgut eine mittlere Primärteilchengröße von $\leq$ 50 nm aufweist, was in der Regel 1 bis 40 h, insbesondere 4 bis 20 h, dauert.

Das Mahlgut wird dann zur Entfernung des Mahlhilfsmittels in Wasser angerührt, abfiltriert, gewaschen und von den Mahlkörpern abgetrennt. Bei der Mahlung mit Stahlkugeln kann das Mahlgut zur Entfernung eventuell vorhandenen Eisenabriebs einer Nachbehandlung mit Salzsäure unterzogen werden.

Zur Steuerung der Kristallgröße kann es auch vorteilhaft sein, den Kristallisationsprozeß in Gegenwart von Pigmentsynergisten durchzuführen, wobei üblicherweise etwa 0,01 bis 0,1 g Synergist je g Rohpigment eingesetzt werden. Wenn ein Vorzerkleinerungsschritt durchgeführt wird, kann der Pigmentsynergist auch schon hier zugesetzt werden.

Pigmentsynergisten sind Verbindungen, die den Pigmentchromophor ganz oder teilweise in ihrer Molekülstruktur enthalten. Dabei muß die Struktur des Pigmentsynergisten nicht mit der Struktur des Pigments, dessen Kristallisation beeinflusst werden soll, übereinstimmen. So können im vorliegenden Fall nicht nur Pigmentsynergisten eingesetzt werden, deren Struktur auf der Isoindolinstruktur basiert, sondern z.B. auch solche auf Basis der Chinophthalonstruktur.

Beispiele für besonders geeignete Pigmentsynergisten sind die aus der WO-A-02/00643 bekannten Chinophthalonderivate, wobei die sich von C.I. Pigment Yellow 138 ableitenden, eine oder mehrere Sulfonsäurefunktionen an den Naphthalinringen aufweisenden Pigmentsynergisten bevorzugt sind.

Die Anwesenheit von Pigmentsynergisten kann sich zusätzlich auch positiv auf die Dispergierbarkeit der erfindungsgemäßen Isoindolinpigmente I im Anwendungsmedium auswirken.

Die Dispergierbarkeit der erfindungsgemäßen Isoindolinpigmente I kann zudem durch Inkontaktbringen mit herkömmlichen Additiven verbessert werden. Neben aromatischen Sulfonsäurederivaten, wie Naphthalinsulfonsäuren und deren Salzen, und Additiven auf Basis von Kolophoniumderivaten sind insbesondere für die Kunststoffeinfärbung

Additive auf Basis von natürlichen und synthetischen Wachsen geeignet. Beispielhaft seien Wachse auf Basis von Polyethylen und von Polypropylen, die auch oxidiert sein können, von Polyethylenoxid, von ethoxylierten Fettalkoholen, von Polyethylenoxid/Polypropylenoxid/Blockcopolymerisaten, von Fettsäureestern (z.B. Montanwachse), von Fettsäureamiden und von Ethylen/Vinylacetat-Copolymerisaten genannt.

Kommen derartige Additive zum Einsatz, so liegt ihre Menge üblicherweise bei 2 bis 30 Gew.-%, bezogen auf das Pigment.

Die erfindungsgemäßen Isolindolinpigmente I eignen sich hervorragend zur Einfärbung von hochmolekularen organischen Materialien natürlicher und synthetischer Herkunft.

Als Beispiele für derartige Materialien seien Kunststoffe, Pulverlacke, Tinten, Toner und Farbfilter genannt.

Besondere Bedeutung haben die erfindungsgemäßen Isoindolinpigmente I für die Einfärbung von Kunststoffen.

Beispiele für vorteilhaft einzufärbende Kunststoffe sind im einzelnen:

Polyolefine, wie Polyethylen, Polypropylen, Polybutylen, Polyisobutylen und Poly-4-methyl-1-penten, Polyolefincopolymere, wie Luflexen® (Basell), Nordel® (Dow) und Engage® (DuPont), Cycloolefincopolymere, wie Topas® (Celanese); Polytetrafluorethylen (PTFE), Ethylen/Tetrafluorethylen-Copolymere (ETFE); Polyvinylidendifluorid (PVDF), Polyvinylchlorid (PVC), Polyvinylidenchlorid, Polyvinylalkohole, Polyvinylester, wie Polyvinylacetat, Vinylestercopolymere, wie Ethylen/Vinylacetat-Copolymere (EVA), Polyvinylalkanale, wie Polyvinylacetal und Polyvinylbutyral (PVB), Polyvinylketale, Polyamide, wie Nylon® [6], Nylon [12] und Nylon [6,6] (DuPont), Polyimide, Polycarbonat, Polycarbonat-Copolymere und physikalische Blends von Polycarbonaten mit Acryl-Butadien-Styrol-Copolymeren, Acrylnitril-Styrol-Acrylester-Copolymeren, Polymethylmethacrylaten, Polybutylacrylaten, Polybutylmethacrylaten, Polybutylenterephthalaten und Polyethylenterephthalaten, Polyester wie Polyethylenterephthalat (PET), Polybutylenterephthalat (PBT) und Polyethylennaphthalat (PEN), Copolymerisate, Umesterungsprodukte und physikalische Gemische (Blends) der zuvor genannten Polyalkylenterephthalate, Poly(meth)acrylate, Polyacrylamide, Polyacrylnitril, Poly(meth)acrylat/ Polyvinylidendifluorid-Blends, Polyurethane, Polystyrol, Styrolcoplymere, wie Styrol/ Butadien-Copolymere, Styrol/Acrylnitril-Copolymere (SAN), Styrol/Ethylmethacrylat-Copolymere, Styrol/ Butadien/Ethylacrylat-Copolymere, Styrol/Acrylnitril/Methacrylat-Copolymere, Acrylnitril/Butadien/Styrol-Copolymere (ABS) und Methacrylat/Butadien/- Styrol-Copolymere (MBS), Polyether wie Polyphenylenoxid, Polyetherketone, Polysulfone, Polyethersulfone, Polyglykole wie Polyoxymethylen (POM), Polyarylenvinylene, Silicone, Ionomere, thermoplastische und duroplastische Polyurethane sowie deren Mischungen, wobei Polyolefine, vor allem Polyethylen (LDPE, MDPE, HDPE), und Polyvinylchlorid hervorzuheben sind.

Die Einarbeitung der erfindungsgemäßen Isoindolinpigmente I in die Kunststoffe kann nach allen bekannten Methoden erfolgen, z.B. durch gemeinsames Extrudieren (vorzugsweise mit einem Ein- oder Zweischneckenextruder), Walzen, Kneten, Pressen oder Mahlen, wobei die Kunststoffe zu Kunststofformkörpern, Endlosprofilen, Platten, Folien, Fasern, Filmen und Beschichtungen verarbeitet werden können.

Ebenfalls vorteilhaft ist ein Einsatz zuvor separat hergestellter Pigmentpräparationen auf Basis eines Polymeren oder eines Polymer-Blends, eines oder mehrerer Polyolefinwachse oder von deren Mischungen zur Erzielung homogener, farbstarker Einfärbungen bei niedrigschmelzenden Polymeren (z.B. den meisten gängigen Polyolefinen) oder solchen mit niedriger Schmelzviskosität (z.B. weichgemachtem PVC und PVB sowie blasformbarem PET). Während das bei den polymerbasierenden Pigmentpräparationen ("Masterbatch", "Compound") eingesetzte Trägerpolymer(blend) im allgemeinen mit dem einzufärbenden hochmolekularen synthetischen organischen Material identisch ist, finden zur Herstellung polyolefinwachsbasierender Pigmentpräparationen als Trägermaterial insbesondere homo- und copolymere PE- und PP-Wachse, wie Luwax® A (Ethylen-Homopolymerisat; BASF), Luwax EVA (Ethylen-Vinylacetat-Copolymerisat; BASF) und Licowax® PP 230 (Propylen-Homopolymerisat; Clariant) Verwendung.

## Beispiele

### A. Herstellung von erfindungsgemäßen Isoindolinpigmenten I

#### Beispiel 1

100 g eines wasserfeuchten Preßkuchens von C.I. Pigment Yellow 185 (Trockengehalt etwa 50 Gew.-%; hergestellt gemäß Beispiel 1 der DE-A-29 14 086) wurden 1 h in 1125 ml Wasser homogen suspendiert. Die Suspension wurde dann in einem 2,4 1-Druckkessel (Fa. Juchheim) mit Ankerrührer (Drehzahl 150 U/min) in 2 h auf 115°C erhitzt und 12 h bei dieser Temperatur gerührt.

Nach Abkühlen auf 60°C in 1 h wurde das Pigment abfiltriert und mit 5 l 60°C warmen Wassers gewaschen (Leitfähigkeit des ablaufenden Wassers < 100 µS). Der feuchte Preßkuchen wurde im Umlufttrockenschrank bei 70°C getrocknet und zur Desagglomerierung in einer Zahnkranzmühle (Ultrazentrifugalmühle ZM 100, Fa. Retsch; 12er Zahnkranz, 1,0 mm Sieb, 10 000 U/min) gemahlen. Die Ausbeute betrug 100%.

Beispiel 2

570 g einer gemäß Beispiel 1 der DE-A-29 14 086 erhaltenen Synthesesuspension von C.I. Pigment Yellow 185 (Pigmentgehalt: 5,4 Gew.-%) wurden nach Zugabe von 100 g Ethylenglykolmonobutylether unter Rühren auf 100°C (Rückflußtemperatur) erhitzt und 12 h bei dieser Temperatur gerührt.

Die nach einstündigem Abkühlen auf 70°C gebildeten Granulate wurden abfiltriert und mit 5 l 60°C warmen Wassers gewaschen (Leitfähigkeit des ablaufenden Wassers < 50 μS). Der feuchte Preßkuchen wurde im Umlufttrokkenschrank bei 120°C getrocknet und zur Desagglomerierung wie in Beispiel 1 gemahlen. Die Ausbeute betrug 90%.

Beispiel 3

570 g einer gemäß Beispiel 1 der DE-A-29 14 086 erhaltenen Synthesesuspension von C.I. Pigment Yellow 185 (Pigmentgehalt: 5,4 Gew.-%) wurden in einem 2,4 l-Druckkessel (Fa. Juchheim) mit Ankerrührer (Drehzahl 150 U/min) in 2 h auf 130°C erhitzt und 3 h bei dieser Temperatur gerührt.

Nach Abkühlen auf 60°C in 1 h wurde das Pigment abfiltriert und mit 5 l 60°C warmen Wassers gewaschen (Leitfähigkeit des ablaufenden Wassers < 50 μS). Der feuchte Preßkuchen wurde im Umlufttrockenschrank bei 70°C getrocknet und zur Desagglomerierung wie in Beispiel 1 gemahlen. Die Ausbeute betrug 100%.

Beispiel 4

600 g einer gemäß Beispiel 1 der DE-A-29 14 086 erhaltenen Synthesesuspension von C.I. Pigment Yellow 185 (Pigmentgehalt: 5,1 Gew.-%) wurden in einem 1 l-Glasreaktor (Fa. Normag) mit Ankerrührer (Drehzahl 150 U/min) in 2 h auf 95°C erhitzt und 36 h bei dieser Temperatur gerührt.

Nach Abkühlen auf 60°C in 1 h wurde das Pigment abfiltriert und mit 5 l 60°C warmen Wassers gewaschen (Leitfähigkeit des ablaufenden Wassers < 50 μS). Der feuchte Preßkuchen wurde im Umlufttrockenschrank bei 70°C getrocknet und zur Desagglomerierung wie in Beispiel 1 gemahlen. Die Ausbeute betrug 100%.

B. Prüfung von erfindungsgemäßen Pigmenten in Kunststoffen

Zur Prüfung ihrer Anwendungseigenschaften wurden die erhaltenen Pigmente in Polyethylen (LDPE) und Weich-PVC eingearbeitet.

Die Bestimmung der koloristischen Eigenschaften und der Dispergierhärte erfolgte jeweils in der Weißaufhellung (1:10) an wie folgt hergestellten Walzfellen:

LDPE-Walzfell:

80 g weiß eingefärbtes LDPE-Granulat (Sicolen® Weiß 00/24729 Granulat mit 5 Gew.-% Titandioxid) und 0,4 g des jeweiligen Pigments wurden getrennt abgewogen und auf einem Collin-Mischwalzwerk wie folgt weiterverarbeitet:

Das weiß eingefärbte LDPE-Granulat wurde bei 150°C (± 2°C) Walzentemperatur vorgelegt. Nach Fellbildung wurde das Pigment portionsweise zugegeben und bei einer Walzentemperatur von 150°C (± 2°C) und 250 Walzenumdrehungen zu einem Walzfell der Stärke 0,4 mm (± 10%) verarbeitet. Nach Abschneiden von ca. 10 g (Walzfell 1) wurde das restliche Walzfell halbiert und nach Übereinanderlegen der beiden Hälften weitere 220 Walzenumdrehungen bei 150°C (± 2°C) gewalzt (Walzfell 2).

PVC-Walzfell:

80 g weiß eingefärbte PVC-Grundmischung nach DIN 53775-B (48,7 g Vinylchlorid-Homopolymerisat, 25,1 g Diisodecylphthalat, 1,12 g epoxidiertes Sojaöl, 0,97 g Stabilisator, 0,15 g Stearinsäure und 4,0 g Titandioxid) und 0,4 g des jeweiligen Pigments wurden auf einem Turbularmischer homogenisiert.

Die erhaltene Mischung wurde auf einem Collin-Walzwerk bei 150°C (± 2°C) Walzentemperatur und 165 Walzenumdrehungen zu einem Walzfell der Stärke 0,4 mm (± 10%) verarbeitet. Nach Abschneiden von ca. 10 g (Walzfell 1) wurde das restliche Walzfell halbiert und nach Übereinanderlegen der beiden Hälften weitere 225 Walzenumdrehungen bei 150°C (± 2°C) gewalzt (Walzfell 2).

Die farbmetrische Vermessung der Proben (Walzfell 2) erfolgte nach DIN 5033 (0/0° Meßgeometrie) mit einem Spektralphotometer Teleflash (Fa. Optronik).

Das Aufhellverhältnis AV wurde nach DIN 53235-1 durch Angleich der Farbtiefe der zu prüfenden Probe an

die Standardfarbtiefe 1/3 nach der FIAF-Methode. Die in der Tabelle angegebenen CIELAB-Farbwerte Farbwinkel Hue [°], Chroma C*, Helligkeit L* (lightness), a* (Rot- bzw. Grünanteil) und b* (Blau- bzw. Gelbanteil) wurden nach Angleich der Farbtiefe nach DIN 6174 (Normlichtart D65, 10°-Normalbetrachter) ermittelt.

Die Dispergierhärte (DH) wurde aus den jeweils bei der Messung erhaltenen Aufhellverhältnissen nach der folgenden Formel berechnet:

$$DH = \left[ \frac{AV2}{AV1} - 1 \right] x\ 100$$

mit:: AV 1 = Aufhellverhältnis beim Walzfell 1
AV 2 = Aufhellverhältnis beim Walzfell 2

Die erhaltenen Meßergebnisse (CIELAB-Farbwerte und Dispergierhärten) sind in der folgenden Tabelle zusammengestellt. Dabei sind zum Vergleich V auch die für das in Beispiel 14 der EP-A-29 007 in LDPE erhaltenen Meßergebnisse aufgeführt.

Tabelle

| Pigment (Bsp.) | Hue [°] | C* | L* | a* | b* | AV2 | DH |
|---|---|---|---|---|---|---|---|
| LDPE | | | | | | | |
| 1 | 92,2 | 74,1 | 87,5 | -3,8 | 73,8 | 6,7 | 2 |
| 2 | 91,8 | 73,3 | 86,8 | -3,3 | 73,2 | 5,4 | 6 |
| 3 | 91,8 | 72,9 | 87,0 | -3,3 | 72,8 | 5,3 | 4 |
| 4 | 91,1 | 73,0 | 86,7 | -3,3 | 74,0 | 5,2 | 2 |
| V | 84,4 | 56,3 | 73,6 | 5,0 | 56,1 | 2,1 | 4 |
| Weich-PVC | | | | | | | |
| 4 | 91,0 | 74,3 | 87,4 | 2,5 | 74,3 | 11,7 | 6 |

**Patentansprüche**

1. Isoindolinpigmente der allgemeinen Formel I

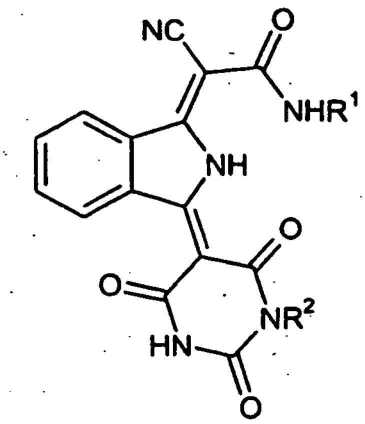

I

in der die Variablen folgende Bedeutung haben:

$R^1$ $C_1$-$C_4$-Alkyl;
$R^2$ Wasserstoff oder $C_1$-$C_4$-Alkyl,

die in LDPE eine Dispergierhärte ≤ 10 aufweisen und zur Einstellung der Standardfarbtiefe 1/3 ein Aufhellverhältnis von ≥ 5 erfordern.

**2.** Isoindolinpigmente der Formel I nach Anspruch 1, in der $R^1$ Methyl und $R^2$ Wasserstoff bedeutet.

**3.** Verfahren zur Herstellung von Isoindolinpigmenten gemäß Anspruch 1 oder 2, **dadurch gekennzeichnet, daß** man das bei der Pigmentsynthese anfallende Rohpigment in wäßriger Suspension, der organische Lösungsmittel aus der Gruppe der Alkohole, Etheralkohole, Ether, Ketone, Carbonsäureamide und Carbonsäureester zugesetzt sein können, einer 1 bis 60stündigen thermischen Behandlung bei einer Temperatur T im Bereich von 90 bis 180°C unterzieht und anschließend auf übliche Weise isoliert, wobei die Temperatur T [°C] von der Behandlungsdauer t [h] nach folgender Formel aus der gewählten Behandlungsdauer zu berechnen ist:

$$T\,[°C] = [148 - 14{,}4 \ln(t)] \pm 10$$

**4.** Verfahren nach Anspruch 3, **dadurch gekennzeichnet, daß** man die bei der wäßrigen Pigmentsynthese anfallende Suspension der thermischen Behandlung unterzieht.

**5.** Verwendung von Isoindolinpigmenten der Formel I gemäß Anspruch 1 oder 2 zur Einfärbung von hochmolekularen organischen Materialien natürlicher und synthetischer Herkunft.

**6.** Verwendung nach Anspruch 5, **dadurch gekennzeichnet, daß** es sich bei den hochmolekularen Materialien um Kunststoffe. Pulverlacke, Tinten, Toner und Farbfilter handelt.

**7.** Verwendung nach Anspruch 5, **dadurch gekennzeichnet, daß** es bei den hochmolekularen Materialien um Kunststoffe handelt.

**8.** Kunststoffe, eingefärbt mit Isoindolinpigmenten gemäß Anspruch 1 oder 2.

## Claims

**1.** An isoindoline pigment of the general formula I

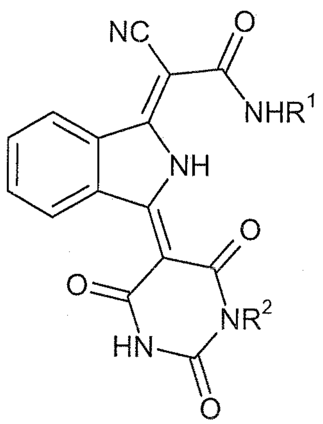

I

in which the variables are defined as follows:

$R^1$ is $C_1$-$C_4$-alkyl;
$R^2$ is hydrogen or $C_1$-$C_4$-alkyl,

whose value expressing ease of dispersion in LDPE is ≤ 10 and which require a reduction ratio of ≥ 5 to obtain 1/3 of standard depth of shade.

**2.** The isoindoline pigment of formula I according to claim 1, in which $R^1$ is methyl and $R^2$ is hydrogen.

**3.** A process for the preparation of isoindoline pigments according to claim 1 or 2, which comprises subjecting the crude pigment produced during pigment synthesis to heat treatment for from 1 to 60 hours at a temperature T in the range from 90 to 180°C in aqueous suspension, to which organic solvents from the group of alcohols, ether alcohols, ethers, ketones, carboxamides, and carboxylic esters may have been added, and then isolating the material conventionally, where the temperature T [°C] is to be calculated from the treatment time t [h] by the following formula using the selected treatment time:

$$T\,[°C] = [148 - 14.4 \ln (t)] \pm 10$$

**4.** The process according to claim 3, wherein the suspension produced during aqueous pigment synthesis is subjected to the heat treatment.

**5.** The use of isoindoline pigments of the formula I according to claim 1 or 2 for the coloring of high-molecular-weight organic materials of natural and synthetic origin.

**6.** The use according to claim 5, wherein the high-molecular-weight materials are plastics, powder coatings, inks, toners, and color filters.

**7.** The use according to claim 5, wherein the high-molecular-weight materials are plastics.

**8.** A plastic, colored with isoindoline pigments according to claim 1 or 2.

**Revendications**

**1.** Pigments iso-indoline de formule générale I

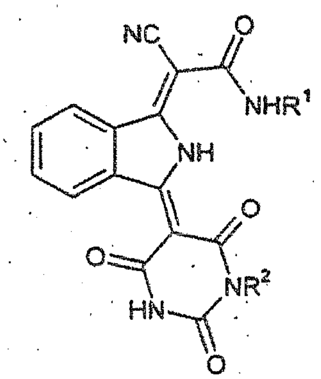

I

dans laquelle les variables ont les significations suivante :

$R^1$ représente un groupe alkyle en $C_1$-$C_4$ ;
$R^2$ représente un atome d'hydrogène ou un groupe alkyle en $C_1$-$C_4$ ;

qui présentent dans du LDPE (polyéthylène basse densité) une dureté en dispersion ≤ 10 et requièrent pour l'ajustement de l'intensité de couleur standard 1/3 un rapport d'éclaircissement de ≥ 5.

**2.** Pigments iso-indoline de formule I selon la revendication 1, dans lesquels $R^1$ représente le groupe méthyle et $R^2$ représente un atome d'hydrogène.

3. Procédé pour la préparation de pigments iso-indoline selon la revendication 1 ou 2, **caractérisé en ce qu'**on soumet à un traitement thermique pendant 1 à 60 heures à une température T dans la plage de 90 à 180 °C le pigment brut produit dans la synthèse du pigment, en suspension aqueuse à laquelle peuvent être ajoutés des solvants organiques choisis dans le groupe des alcools, éther-alcools, éthers, cétones, carboxamides et esters d'acides carboxyliques, et ensuite on l'isole à la manière usuelle, la température T [°C] devant être calculée en fonction de la durée du traitement t [h] selon la formule suivante à partir de la durée de traitement choisie :

$$T\ [°C] = [148-14{,}4\ \ln(t)] \pm 10$$

4. Procédé selon la revendication 3, **caractérisé en ce qu'**on soumet au traitement thermique la suspension produite lors de la synthèse aqueuse du pigment.

5. Utilisation de pigments iso-indoline de formule I selon la revendication 1 ou 2, pour la coloration de matières organiques de masse moléculaire élevée, d'origine naturelle ou synthétique.

6. Utilisation selon la revendication 5, **caractérisée en ce que** les matières de masse moléculaire élevée consistent en des matières plastiques, des peintures en poudre, des encres, des toners et des filtres colorés.

7. Utilisation selon la revendication 5, **caractérisée en ce que** les matières de masse moléculaire élevée consistent en des matières plastiques.

8. Matières plastiques, colorées avec des pigments iso-indoline selon la revendication 1 ou 2.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 2914086 A
- DE 2757982 A
- EP 29007 A
- DE 1670748 A
- WO 0200643 A